# EUROPEAN PATENT APPLICATION

(11) **EP 4 585 493 A1**
(43) Date of publication of application: **16.07.2025**
(21) Application number: 23862914.1
(22) Date of filing: 21.08.2023
(51) Int. Cl.: B62D 7/18, B60G 3/20

(54) **STEERING DEVICE**

(30) Priority: 09.09.2022 JP 2022143684
(71) Applicant: THK Co., Ltd., Tokyo 108-8506 (JP)
(72) Inventor: WATANABE Yoshihito, Minato-ku, Tokyo 108-8506 (JP); MINAMI Toshiro, Minato-ku, Tokyo 108-8506 (JP); SAKUYAMA Takashi, Minato-ku, Tokyo 108-8506 (JP); IWASHIRO Sho, Minato-ku, Tokyo 108-8506 (JP)
(74) Representative: Grünecker Patent- und Rechtsanwälte PartG mbB
(86) International application number: PCT/JP2023/029958
(87) International publication number: WO 2024/053374

(57) **Abstract**

Provided is a steering device (100), which is configured to steer a vehicle wheel about a kingpin axis, the steering device (100) including: a hub (120) configured to rotatably support the vehicle wheel (110); a knuckle arm (130) configured to steer the vehicle wheel (110); and a lower arm (150) configured to connect the vehicle body and the vehicle wheel (110) to each other. A lower rotation guiding part (170) is provided at one end of the lower arm (150), the lower rotation guiding part (170) being rotatable about the kingpin axis. The lower rotation guiding part (170) includes: a guide rail (302) formed in an arc shape having a constant curvature; and a moving block (303) configured to move on the guide rail (302). An imaginary plane including the guide rail (302) is perpendicular to the kingpin axis.

## Description

### TECHNICAL FIELD

The present invention relates to a steering device configured to steer a vehicle wheel of an automobile or the like.

### BACKGROUND ART

A steering device configured to steer a vehicle wheel provided on a vehicle body is employed in an automobile or the like. The vehicle wheel is turned about a kingpin axis, and the kingpin axis is set to incline at a predetermined angle. Although the steering device shows excellent steering performance with setting a scrub radius to be smaller, which is a distance between a position at which an axis line of the kingpin axis intersects a road surface and the center of a ground contact surface of the vehicle wheel to the road surface, related-art steering devices may have difficulties in setting the scrub radius to be smaller by bringing the kingpin axis closer to the vehicle wheel, because a joint part of an upper arm and a joint part of a lower arm are each formed of a ball joint.

### CITATION LIST

### PATENT LITERATURE

[PTL 1] JP 5-58127 A

### DISCLOSURE OF THE INVENTION

### PROBLEMS TO BE SOLVED BY THE INVENTION

As a technology for decreasing a scrub radius, a technology described in Patent Literature 1 has been known. In Patent Literature 1, a kingpin axis is constructed by a guide rail to allow the kingpin axis to be closer to the center of a vehicle wheel. Accordingly, the scrub radius is decreased.

In recent years, movement of popularizing electric automobiles has grown in order to address environmental issues, and thus, demand for a steering device which can decrease the scrub radius is further increasing, because a so-called in-wheel motor, in which a motor is installed inside the vehicle wheel, is used for the electric automobiles.

### MEANS FOR SOLVING THE PROBLEMS

The present invention has been made in view of the problem as described above, and an object of the present invention is to provide a steering device configured to steer a vehicle wheel about a kingpin axis, which can improve driving stability by decreasing a scrub radius as much as possible, and also can easily change a kingpin angle and a caster angle of the kingpin axis to configure the kingpin axis having an appropriate angle commensurate with suspension types or the like.

That is, according to the present invention, there is provided a steering device, which is configured to steer a vehicle wheel about a kingpin axis, the vehicle wheel being provided to a vehicle body, the steering device including: a hub configured to rotatably support the vehicle wheel; a knuckle arm fixed to the hub and configured to steer the vehicle wheel; and a lower arm configured to pivotably connect the vehicle body and the vehicle wheel to each other. A lower rotation guiding part is provided at one end of the lower arm, the lower rotation guiding part being configured to couple the hub and the lower arm to each other, and being rotatable about the kingpin axis. The lower rotation guiding part includes: a guide rail formed in an arc shape having a constant curvature; and a moving block configured to move on the guide rail. An imaginary plane including the guide rail is perpendicular to the kingpin axis.

### EFFECTS OF THE INVENTION

According to the steering device of the present invention, the kingpin axis is configured to be a rotation center for a moving block of the lower rotation guiding part, and thus the kingpin axis can be embedded inside the vehicle wheel, resulting in that a scrub radius can be decreased as much as possible. Further, the imaginary plane including the guide rail is perpendicular to the kingpin axis, and hence, with changing of an inclination angle of the imaginary plane, that is, a mounting posture of the guide rail with respect to the hub, the kingpin angle and the caster angle can be changed. Thus, according to the steering device of the present invention, the scrub radius can be decreased as much as possible, and also the kingpin angle and the caster angle can be easily changed by changing the mounting posture of the guide rail.

### BRIEF DESCRIPTION OF THE DRAWINGS

FIG. 1 is a perspective view of a steering device according to a first embodiment of the present invention.
FIG. 2 shows a state of the steering device according to the first embodiment of the present invention as viewed from the rear of a vehicle body.
FIG. 3 is a perspective view for illustrating a lower rotation guiding part according to the first embodiment of the present invention.
FIG. 4 shows a state of the steering device according to the first embodiment of the present invention as viewed from below.
FIG. 5 shows a state of the steering device according to the first embodiment of the present invention as viewed from a wheel axial direction.
FIG. 6 is a perspective view of a steering device according to a second embodiment of the present invention.
FIG. 7 shows a state of the steering device according to the second embodiment of the present invention as viewed from above.
FIG. 8 shows a state of the steering device according to the second embodiment of the present invention as viewed from the rear of a vehicle body.

### MODE FOR CARRYING OUT THE INVENTION

Now, a steering device of the present invention is described in detail with reference to the attached drawings.

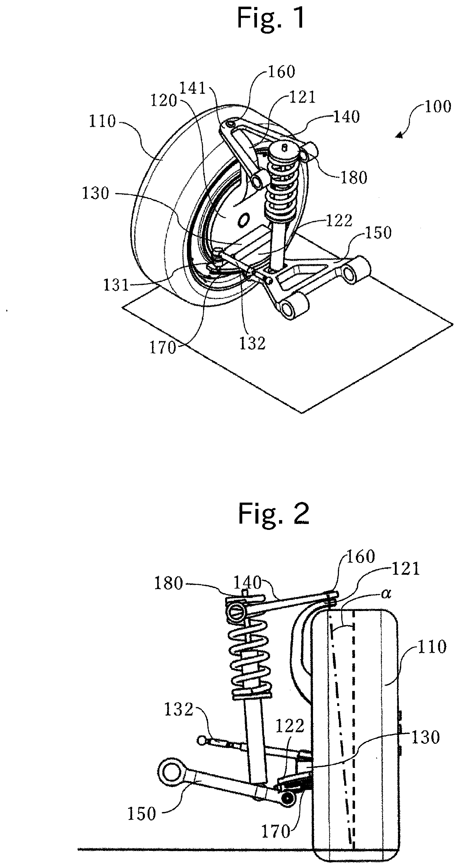

FIG. 1 is a perspective view of a steering device 100 according to a first embodiment of the present invention. The steering device 100 is used in steering a vehicle wheel of an automobile or the like. With the use of the steering device 100, a travel direction of a vehicle body of the automobile or the like can be controlled.

The steering device 100 includes: a hub 120 which is arranged inside a vehicle wheel 110 provided to a vehicle body (not shown), and rotatably supports the vehicle wheel 110; a knuckle arm 130 configured to steer the vehicle wheel 110; an upper arm 140 and a lower arm 150 which couple the vehicle body and the vehicle wheel 110 to each other; an upper rotation guiding part 160 which supports the vehicle wheel 110 such that the vehicle wheel 110 is turnable with respect to the upper arm 140; and a lower rotation guiding part 170 which supports the vehicle wheel 110 such that the vehicle wheel 110 is turnable with respect to the lower arm 150. In the steering device 100 of the first embodiment, a double wishbone type suspension device, in which the upper arm 140 and the lower arm 150 are arranged side by side in an up-and-down direction, is described as an example, but a type of the suspension is not limited thereto. A strut type suspension device, in which a vehicle wheel 110 is suspended by a shock absorber 180 and a lower arm 150, may be employed, and the type of the suspension can be appropriately changed. Needless to say, in a case of the strut type suspension device, the upper arm 140 and the upper rotation guiding part 160 are not included in the configuration of the steering device 100.

The knuckle arm 130 is fixed to the hub 120. A joint part 131 which is a part of the knuckle arm 130 is offset from an axle of the vehicle wheel 110. A tie rod 132 is rotatably coupled to the joint part 131. With this configuration, the knuckle arm 130 is supported so as to be rotatable with respect to the tie rod 132, and thus steering operation transmitted from the tie rod 132 can be transmitted to the vehicle wheel 110.

The upper arm 140 includes a bent part 141 at one end, and is formed in a substantially V-shape in plan view. One end of the upper arm 140 is coupled to a bracket 121 extending from the hub 120 to above the vehicle wheel 110, while another end of the upper arm 140 is coupled to the vehicle body. With this configuration, the vehicle body and the vehicle wheel 110 are relatively and freely movable up and down.

As illustrated in FIG. 1 and FIG. 2, the upper arm 140 and the bracket 121 are coupled to each other via the upper rotation guiding part 160. The upper rotation guiding part 160 is fixed to the vehicle wheel 110 via the bracket 121. The upper rotation guiding part 160 is provided above the axle of the vehicle wheel 110, and is formed of a ball joint. Thus, the upper arm 140 is pivotably connected to the bracket 121 fixed to the hub 120 inside the vehicle wheel 110. Further, the bracket 121 is freely rotatable with respect to the upper arm 140 around the axis of the upper rotation guiding part 160. With this configuration, the vehicle wheel 110 is turnable with respect to the upper arm 140 with the upper rotation guiding part 160 as a rotation axis.

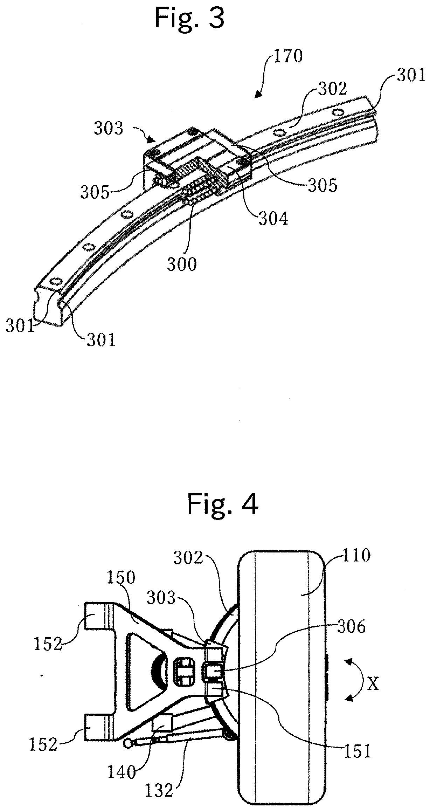

As illustrated in FIG. 2, the lower rotation guiding part 170 is provided to a mounting surface 122 provided to the hub 120. That is, the lower rotation guiding part 170 is fixed to the vehicle wheel 110 via the hub 120. The mounting surface 122 is provided on a plane slightly inclined with respect to the hub 120. The lower rotation guiding part 170 is provided below the axle of the vehicle wheel 110. As illustrated in FIG. 3, the lower rotation guiding part 170 includes a guide rail 302 and a moving block 303. The guide rail 302 includes a plurality of rolling surfaces 301 formed thereon, in which rolling elements 300 such as balls are allowed to roll along a longitudinal direction of each rolling surface 301. The moving block 303 freely moves along a longitudinal direction of the guide rail 302. Two lines of the rolling surfaces 301 are provided on each side surface of the guide rail 302, that is, total four lines of the rolling surfaces 301 are formed on the guide rail 302.

The moving block 303 is assembled to the guide rail 302 via a large number of the rolling elements 300. The guide rail 302 is formed in an arc shape having a constant curvature, and the guide rail 302 is fixed to the mounting surface 122. Therefore, the mounting surface 122 corresponds to an imaginary plane including the guide rail 302, and a mounting posture of the guide rail 302 with respect to the hub 120 is determined depending on an inclination angle of the mounting surface 122.

The moving block 303 includes a block body 304 and a pair of lid bodies 305 fixed to both end surfaces of the block body 304 in the moving direction. Four lines of load rolling surfaces (not shown) are formed on the block body 304, and those load rolling surfaces are provided at positions facing the rolling surfaces 301 of the guide rail 302. A load passage, in which the rolling element 300 rolls while bearing a load between the guide rail 302 and the block body 304, is established by the load rolling surface and the rolling surface 301 facing each other. Further, the block body 304 includes four lines of ball return passages (not shown) each provided in substantially parallel to respective load rolling surfaces, and the rolling element 300 rolls in the ball return passage in a state of being free from the load.

Meanwhile, a direction change passage (not shown), which connects the load passage and the ball return passage to each other, is provided to the lid body 305, allowing the rolling element 300 to come and go between the load passage and the ball return passage. Accordingly, when the pair of lid bodies 305 are respectively fixed to the front and the rear of the block body 304 in a moving direction, respective end portions of the load passage and the ball return passage are connected to each other via the direction change passage of the lid body 305, and thus an endless loop passage for the rolling elements 300 is established in the moving block 303. With this configuration, the guide rail 302 and the moving block 303 can relatively move. In the example shown in this embodiment, the moving block 303 includes four circuits of the endless loop passages, but the number of lines of the endless loop passages can be appropriately changed in design. Further, the lower rotation guiding part 170 has been described as a rolling guiding device in which the moving block 303 moves on the guide rail 302 via the large number of rolling elements 300, but is not limited thereto. The lower rotation guiding part 170 may be, for example, a slide guiding device in which the moving block 303 moves in sliding contact with the guide rail 302.

FIG. 4 shows a state of the steering device 100 as viewed from below. The lower arm 150 is formed in a substantially A-shape in plan view, in which the lower arm 150 is gradually widening from one end portion 151. The one end portion 151 of the lower arm 150 is coupled to the moving block 303 of the lower rotation guiding part 170, while another end portion 152 of the lower arm 150 is coupled to the vehicle body. That is, the lower arm 150 is coupled to the vehicle wheel 110 via the lower rotation guiding part 170 fixed to the hub 120. The one end portion 151 is fixed to a fixing part 306 mounted to the moving block 303. A through hole (not shown) is formed in the fixing part 306 in the up-and-down direction on the drawing sheet of FIG. 4, and the one end portion 151 and the moving block 303 are connected to each other via a pin inserted into the through hole. With this configuration, the lower arm 150 is supported so as to be freely pivotable with a connection portion between the lower arm 150 and the moving block 303 as an axis, and the vehicle body and the vehicle wheel 110 are relatively and freely movable up and down.

Further, with the guide rail 302 and the moving block 303 being relatively and freely movable, the vehicle wheel 110 is turnable with respect to the lower arm 150 via the hub 120 fixed to the guide rail 302 by the guide rail 302 moving with respect to the moving block 303.

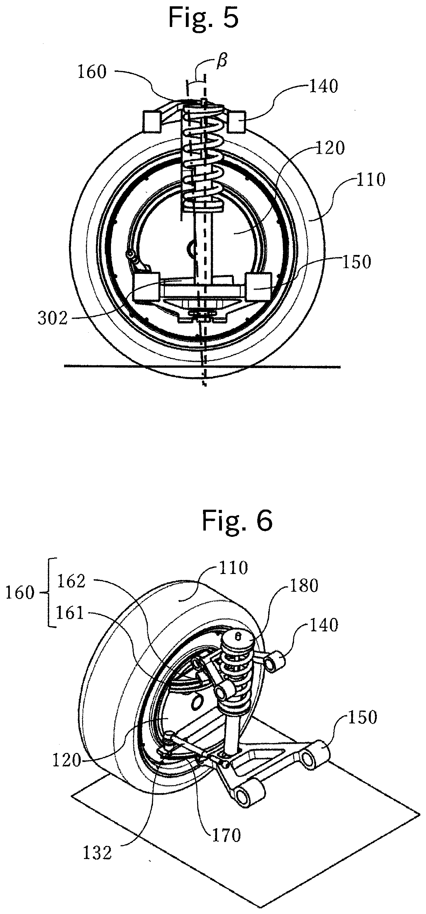

As described above, the vehicle wheel 110 is supported by the upper rotation guiding part 160 so as to be turnable with respect to the upper arm 140, while being supported by the lower rotation guiding part 170 so as to be turnable with respect to the lower arm 150. That is, the vehicle wheel 110 is turned with a kingpin axis as a rotation axis, which is an axis line connecting a rotation center of the upper rotation guiding part 160 and a rotation center of the moving block 303 in the lower rotation guiding part 170 to each other. Thus, the rotation center of the moving block 303 overlaps with the kingpin axis. The kingpin axis in this embodiment is not formed as a physical pin, but is an imaginary kingpin axis connecting the rotation center of the upper rotation guiding part 160 and the rotation center of the lower rotation guiding part 170 to each other (hereinafter referred to as "imaginary kingpin axis"). This imaginary kingpin axis is indicated with a single-dot-dash line in FIG. 2 and FIG. 5. As illustrated in FIG. 2, the imaginary kingpin axis is inclined at a predetermined kingpin angle α. Further, as illustrated in FIG. 5, the imaginary kingpin axis is inclined at a predetermined caster angle β.

FIG. 5 shows a state of the vehicle wheel 110 as viewed from a wheel axial direction. The imaginary kingpin axis is the rotation center of the moving block 303, one end of which moves on the guide rail 302, and thus, the imaginary plane including the guide rail 302 is perpendicular to the imaginary kingpin axis. Thus, when an inclination of the imaginary plane, that is, an inclination angle of the mounting surface 122 with respect to the hub 120 is changed, a posture of the guide rail 302 is changed. Accordingly, the kingpin angle α (see FIG. 2) and the caster angle β (see FIG. 5) of the imaginary kingpin axis are changed.

As described above, one end of the imaginary kingpin axis of the steering device 100 is the rotation center of the moving block 303 coupled to the one end portion 151 of the lower arm 150, and thus, the imaginary kingpin axis is set to be embedded inside the vehicle wheel 110 (see a single-dot-dash line in FIG. 2). Thus, the steering device 100 can decrease, as much as possible, a scrub radius which is a distance between a position at which an axis line of the kingpin axis intersects with a road surface, and a ground contact surface center (broken line in FIG. 2) of the vehicle wheel with respect to the road surface. Decreasing a scrub radius of the vehicle wheel having the inside being filled, such as an in-wheel motor, has been difficult, but in the steering device 100 of the present invention, the imaginary kingpin axis can be embedded in the vehicle wheel 110, and thus, the scrub radius can be decreased as much as possible even in the vehicle wheel having the inside being filled. Further, the imaginary plane including the guide rail 302 is perpendicular to the imaginary kingpin axis, and thus, the kingpin angle α and the caster angle β can be changed by changing the inclination angle of the imaginary plane, that is, changing the mounting posture with respect to the hub 120. Thus, the steering device 100 of the present invention can, regardless of a category of suspension type, decrease the scrub radius as much as possible, and can also easily change the kingpin angle α and the caster angle β by changing the mounting posture of the guide rail 302 with respect to the hub 120.

Further, in a related-art steering device (for example, Patent Literature 1), one end of the upper arm is coupled to the bracket assembled so as to be movable on the guide rail, while another end of the upper arm is coupled to the vehicle wheel, and thus, when the vehicle wheel is turned along with steering, the direction of the upper arm is changed together with the vehicle wheel. As a result, an apparent length, at the time of steering, of the upper arm when the vehicle wheel is viewed from the front or the rear of the vehicle body becomes shorter than an actual length of the upper arm, and hence a change amount of scuff change which is lateral displacement of a vehicle wheel ground contact point becomes large. In contrast, in the steering device 100 of the present invention, the guide rail 302 of the lower rotation guiding part 170 is provided to the hub 120 which supports a rotation of the vehicle wheel 110, and the one end portion 151 of the lower arm 150 is coupled to the moving block which is freely movable along the guide rail 302, while the another end portion 152 of the lower arm 150 is coupled to the vehicle body. Accordingly, the lower arm 150 is configured so as not to be affected by turning of the vehicle wheel. As indicated by an arrow X in FIG. 4, the vehicle wheel 110 is turned in a state of being separated from the lower arm 150, and thus, a direction of the lower arm 150 is not changed along with the vehicle wheel 110 in the steering device 100. Thus, in the steering device 100, an apparent length, at the time of steering, of the lower arm 150 when the vehicle wheel is viewed from the front or the rear of the vehicle body does not change, that is, the apparent length, at the time of steering, of the lower arm 150 and an actual length of the lower arm 150 do not change, resulting in that a change amount of scuff change can be decreased as compared to the related-art steering device. Thus, the steering device 100 can improve the driving stability in the steering as compared to the related-art steering device.

FIG. 6 is a perspective view of a steering device 100 according to a second embodiment of the present invention. The steering device 100 of the second embodiment is different from the steering device of the first embodiment in a configuration of an upper rotation guiding part 160. Thus, in the second embodiment, detailed description of a configuration other than the upper rotation guiding part 160 is omitted. The upper rotation guiding part 160 is fixed to the hub 120 which rotatably supports the vehicle wheel 110, and includes: a guide rail 161, in which rolling elements such as balls are allowed to roll along a longitudinal direction of the guide rail 161; and a moving block 162 freely moves along the longitudinal direction of the guide rail 161. That is, the upper rotation guiding part 160 in the second embodiment has a configuration similar to that of the lower rotation guiding part 170 in the first embodiment, and the guide rail 161 and the moving block 162 can relatively move.

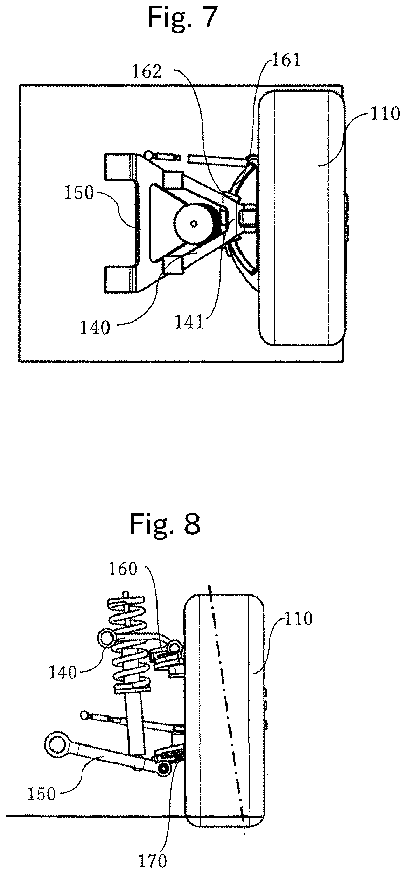

FIG. 7 shows a state of the steering device 100 as viewed from above. A bent part 141, which is one end of the upper arm 140, is coupled to the moving block 162, while another end of the upper arm 140 is coupled to the vehicle body. Thus, the upper arm 140 is coupled to the hub 120 inside the vehicle wheel 110 via the upper rotation guiding part 160. The upper arm 140 and the moving block 162 are connected to each other, similarly to the lower arm 150 and the moving block 303 in the first embodiment, via a pin inserted into a through hole (not shown) of a fixing part (not shown) mounted to the moving block 162. With this configuration, the upper arm 140 is supported so as to be freely pivotable with a connection portion between the upper arm 140 and the moving block 162 as an axis, and the vehicle body and the vehicle wheel 110 are relatively and freely movable up and down.

Further, the guide rail 161 and the moving block 162 are relatively and freely movable, and thus the vehicle wheel 110 is turnable with respect to the upper arm 140 via the hub 120 fixed to the guide rail 161 by the guide rail 161 moving with respect to the moving block 162.

As indicated with a single-dot-dash line in FIG. 8, an imaginary kingpin axis of the steering device 100 is an axis line connecting a rotation center of the moving block 162 coupled to the bent part 141 of the upper arm 140, and a rotation center of the moving block 303 coupled to one end portion 151 of the lower arm 150 to each other. Thus, upper and lower rotation centers for the imaginary kingpin axis of the steering device 100 are both set to be embedded inside the vehicle wheel 110. The imaginary kingpin axis in this case can be adjusted by changing mounting posture, with respect to the hub 120, of the guide rail 161 of the upper rotation guiding part 160 and the guide rail 302 of the lower rotation guiding part 170. Accordingly, the steering device 100 of the second embodiment allows more precise adjustment for the kingpin angle and the caster angle, as compared to the steering device of the first embodiment.

## Claims

1. A steering device (100), which is configured to steer a vehicle wheel (110) about a kingpin axis, the vehicle wheel (110) being provided to a vehicle body, the steering device (100) comprising:
a hub (120) configured to rotatably support the vehicle wheel (110);
a knuckle arm (130) fixed to the hub (120) and configured to steer the vehicle wheel (110); and
a lower arm (150) configured to pivotably connect the vehicle body and the vehicle wheel (110) to each other,
wherein a lower rotation guiding part (170) is provided at one end of the lower arm (150), the lower rotation guiding part (170) being configured to couple the hub (120) and the lower arm (150) to each other, and being rotatable about the kingpin axis,
wherein the lower rotation guiding part (170) includes:
a guide rail (302) formed in an arc shape having a constant curvature; and
a moving block (303) configured to move on the guide rail (302), and
wherein an imaginary plane including the guide rail (302) is perpendicular to the kingpin axis.

2. The steering device (100) according to claim 1,
wherein the lower rotation guiding part (170) is fixed to the hub (120), and
wherein another end of the lower arm (150) is coupled to the vehicle body.

3. The steering device (100) according to claim 1 or **2,** further comprising an upper arm (140) configured to pivotably connect the vehicle body and the vehicle wheel (110),
wherein an upper rotation guiding part (160) is provided at one end of the upper arm (140), the upper rotation guiding part (160) being configured to couple the hub (120) and the upper arm (140) to each other, and being rotatable about the kingpin axis.

4. The steering device (100) according to claim **3,** wherein another end of the upper arm (140) is coupled to the vehicle body.

5. The steering device (100) according to claim **2,** wherein one end of the lower arm (150) is connected to a moving block (303) of the lower rotation guiding part (170).
